# EUROPEAN PATENT APPLICATION

(11) **EP 4 564 548 A1**
(43) Date of publication of application: **04.06.2025**
(21) Application number: 24185628.5
(22) Date of filing: 01.07.2024
(51) Int. Cl.: H01M 50/15, H01M 50/627, H01M 50/636, H01M 50/60

(54) **BATTERY CAP ASSEMBLY INCLUDING SAME, AND BATTERY CELL INCLUDING SAME**

(30) Priority: 30.11.2023 KR 20230147161
(71) Applicant: SAMSUNG SDI CO., LTD., Giheung-gu Yongin-si, Gyeonggi-do 17084 (KR)
(72) Inventor: OH, Seryong, 17084 Yongin-si (KR); LEE, Hyun-Ye, 17084 Yongin-si (KR)
(74) Representative: Marks & Clerk LLP

(57) **Abstract**

A battery cap assembly includes: a cap plate having an electrolyte inlet; and a sealing member to be inserted into the electrolyte inlet. The sealing member has an electrolyte inflow passage penetrating an elastic material in a longitudinal direction of the sealing member.

## Description

### BACKGROUND

### 1. Field

Aspects of embodiments of the present disclosure relate to a sealing member for an electrolyte inlet, a battery cap assembly including same, and a battery cell including same.

### 2. Description of the Related Art

Secondary batteries are rechargeable batteries that may be charged and discharged multiple times. The secondary batteries are mainly used in various application fields, such as electronic products (e.g., smartphones, laptops, tablets, and the like), electric vehicles, and solar power generation and emergency power supplies. In particular, lithium-ion batteries have high energy density and high charging/discharging efficiency, and thus, are used in various electronic products and electric vehicles.

While rechargeable batteries, such as lithium-ion batteries, are repeatedly charged and discharged, a charging efficiency is reduced due to a leakage and a deterioration of the lithium-ion batteries. Exceeding cycle lifespans of the secondary batteries may rapidly reduce battery performance. Accordingly, batteries mounted on electric vehicles and the like may be periodically replaced as the performance thereof is reduced.

Furthermore, as electric vehicles become more widespread, research on ways to utilize "waste batteries" is being actively conducted. For example, some ways to utilize the waste batteries in an energy storage system (ESS) that may store power generated by eco-friendly energy are being explored. For example, from among the waste batteries for electric vehicles, batteries that meet a certain standard may be classified and used in products and systems that desire the battery performance. However, as this is a passive method that classifies and utilizes already deteriorated batteries, an active method that may fundamentally remove deterioration factors and extend lifespans of batteries may be desired.

The above information disclosed in this Background section is for enhancement of understanding of the background of the present disclosure, and therefore, it may contain information that does not constitute related (or prior) art.

### SUMMARY

Embodiments of the present disclosure may be directed to a sealing member for a battery electrolyte inlet, a battery cap assembly including the same, and a battery cell including the same.

The above and other aspects and features of the present disclosure will be described in more detail in, or will be more apparent from, the following description of some embodiments of the present disclosure.

According to one or more embodiments of the present disclosure, a battery cap assembly includes: a cap plate having an electrolyte inlet; and a sealing member configured to be inserted into the electrolyte inlet. The sealing member has an electrolyte inflow passage penetrating an elastic material in a longitudinal direction of the sealing member.

In an embodiment, the sealing member may include: a head portion at one end of the sealing member, and configured to be inserted into an inner diameter of the electrolyte inlet to be in contact with the inner diameter; a fixing portion at a lower end of the head portion, and having a protrusion configured to fix the sealing member; and a tail portion at a lower end of the fixing portion, and extending in the longitudinal direction.

In an embodiment, the head portion may have a first diameter greater than the inner diameter of the electrolyte inlet, and may be configured to be compressed and inserted into the inner diameter of the electrolyte inlet. The fixing portion may have a second diameter greater than the first diameter; and the tail portion may have a third diameter less than the second diameter.

In an embodiment, the battery cap assembly may further include a fixing member below the cap plate, and having a recess portion to accommodate the protrusion of the fixing portion.

In an embodiment, the sealing member may include: a body portion configured to be inserted into an inner diameter of the electrolyte inlet to be in contact with the inner diameter; and an upper fixing portion including a lower surface facing an upper surface of the cap plate in a state in which the body portion is inserted into the electrolyte inlet to be in contact with the electrolyte inlet.

In an embodiment, the sealing member may further include a lower fixing portion configured to be compressed and passed through the inner diameter of the electrolyte inlet to fix the sealing member to the cap plate.

In an embodiment, the lower fixing portion may include an upper surface facing a lower surface of the cap plate in a state in which the body portion is inserted into the electrolyte inlet to be in contact with the electrolyte inlet.

In an embodiment, the body portion may have a fourth diameter greater than the inner diameter of the electrolyte inlet, and may be configured to be compressed and inserted into the inner diameter of the electrolyte inlet; and the upper fixing portion may have a fifth diameter greater than the fourth diameter.

In an embodiment, a maximum diameter of the lower fixing portion may have a sixth diameter greater than a fourth diameter of the body portion.

In an embodiment, the electrolyte inlet may correspond to a vent hole. The sealing member may be configured to be moved in an outward direction in a state in which pressure in a critical pressure range is applied from a lower direction of the cap plate; or the sealing member may be configured to be deformed in shape to open the electrolyte inlet in a state in which a temperature is in a critical temperature range.

In an embodiment, the critical pressure range may be 1.5 MPa to 2 MPa.

In an embodiment, the critical temperature range may be 200°C to 250°C.

In an embodiment, inner surfaces of at least one section of the electrolyte inflow passage of the sealing member inserted into the electrolyte inlet may be in contact with each other to prevent an electrolyte from leaking out.

In an embodiment, the inner surfaces of the at least one section of the electrolyte inflow passage of the sealing member inserted into the electrolyte inlet may be configured to be separated from each other to allow an electrolyte injector to be injected into the electrolyte inflow passage.

In an embodiment, a cavity may be located in a section of the electrolyte inflow passage to prevent a backflow of the electrolyte.

In an embodiment, the electrolyte inflow passage may include: a first section having a first width; a second section connected to a lower portion of the first section, and having a second width greater than the first width; and a third section connected to a lower portion of the second section, and having a third width less than the second width.

According to one or more embodiments of the present disclosure, a sealing member for an electrolyte inlet includes an elastic material having an electrolyte inflow passage penetrating therethrough in a longitudinal direction of the sealing member.

In an embodiment, inner surfaces of at least one section of the electrolyte inflow passage of the sealing member inserted into the electrolyte inlet may be in contact with each other to prevent an electrolyte from leaking out.

In an embodiment, a cavity may be located in a section of the electrolyte inflow passage to prevent a backflow of the electrolyte.

According to one or more embodiments of the present disclosure, a battery cell includes: an electrode assembly; a case configured to accommodate the electrode assembly, and having an open upper portion; and a battery cap assembly connected to the upper portion of the case. The battery cap assembly includes: a cap plate having an electrolyte inlet; and a sealing member configured to be inserted into the electrolyte inlet. The sealing member has an electrolyte inflow passage penetrating an elastic material in a longitudinal direction of the sealing member.

According to one or more embodiments of the present disclosure, a sealing member for an electrolyte inlet may include an electrolyte inflow passage formed of an elastic material and penetrating the sealing member in a longitudinal direction.

According to one or more embodiments of the present disclosure, a battery cell may include an electrode assembly, a case configured to accommodate the electrode assembly and having an open upper portion, and a battery cap assembly.

In some embodiments, by reinjecting electrolyte into an electrolyte inflow passage that is made of an elastic material and formed in a sealing member, degradation factors due to loss of the electrolyte may be reduced or removed, and the sealing performance of a sealing member made of an elastic material may be maintained. Accordingly, a battery may be reused more efficiently.

In some embodiments, the sealing performance of a battery cell may be increased by preventing or substantially preventing electrolyte from flowing back due to a capillary action through a cavity formed in an electrolyte inflow passage.

In some embodiments, a vent hole may be omitted, and thus, a structure of a cap plate may be simplified.

In some embodiments, by omitting a process of forming a vent hole and a vent plate for discharging an internal pressure in a cap plate of a battery cap assembly, battery cell production costs may be reduced.

In some embodiments, by forming structures of sections of an electrolyte inflow passage to be different from each other, sealing performance may be maintained, the electrolyte may be more easily reinjected, and outflow or backflow of the electrolyte may be prevented or substantially prevented.

At least some of the above and other features of the invention are set out in the claims.

However, the aspects and features of the present disclosure are not limited to those described above, and the above and other aspects and features will be clearly understood by a person having ordinary skill in the art from the following detailed description with reference to the drawings.

### BRIEF DESCRIPTION OF DRAWINGS

The above and other aspects and features of the present disclosure will be more clearly understood from the following detailed description of the illustrative, nonlimiting embodiments with reference to the accompanying drawings, in which:
FIG. 1 illustrates an exploded perspective view of a battery cap assembly according to an embodiment of the present disclosure;
FIG. 2 illustrates a cross-sectional view showing a state where a sealing member is assembled to an electrolyte inlet according to an embodiment of the present disclosure;
FIG. 3 illustrates a cross-sectional view showing a state where a sealing member is assembled to an electrolyte inlet according to another embodiment of the present disclosure;
FIG. 4 illustrates a cross-sectional view showing a state where a sealing member is assembled to an electrolyte inlet according to another embodiment of the present disclosure;
FIG. 5 illustrates a cross-sectional view showing a state where a sealing member is assembled to an electrolyte inlet according to another embodiment of the present disclosure;
FIG. 6 illustrates a state where an electrolyte injector is inserted through an electrolyte inflow passage of a sealing member according to an embodiment of the present disclosure;
FIG. 7 illustrates an example of a sealing member including a cavity that prevents a backflow of an electrolyte, according to an embodiment of the present disclosure;
FIG. 8 illustrates an example of a sealing member including a cavity that prevents a backflow of an electrolyte, according to another embodiment of the present disclosure;
FIG. 9 illustrates an example of a battery cell including a sealing member according to an embodiment of the present disclosure; and
FIG. 10 illustrates an example of a battery cell including a sealing member according to another embodiment of the present disclosure.

### DETAILED DESCRIPTION

Hereinafter, embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, redundant description thereof may not be repeated.

When a certain embodiment may be implemented differently, a specific process order may be different from the described order. For example, two consecutively described processes may be performed at the same or substantially at the same time, or may be performed in an order opposite to the described order.

In the drawings, the relative sizes, thicknesses, and ratios of elements, layers, and regions may be exaggerated and/or simplified for clarity. Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

In the figures, the x-axis, the y-axis, and the z-axis are not limited to three axes of the rectangular coordinate system, and may be interpreted in a broader sense. For example, the x-axis, the y-axis, and the z-axis may be perpendicular to or substantially perpendicular to one another, or may represent different directions from each other that are not perpendicular to one another.

Any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein.

References to two compared elements, features, and the like as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

It will be understood that when an element or layer is referred to as being "on," "connected to," or "coupled to" another element or layer, it can be directly on, connected to, or coupled to the other element or layer, or one or more intervening elements or layers may be present. Similarly, when a layer, an area, or an element is referred to as being "electrically connected" to another layer, area, or element, it may be directly electrically connected to the other layer, area, or element, and/or may be indirectly electrically connected with one or more intervening layers, areas, or elements therebetween. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments and is not intended to be limiting of the present disclosure. As used herein, the singular forms "a" and "an" are intended to include the plural forms as well, unless the context clearly indicates otherwise. It will be further understood that the terms "comprises," "comprising," "includes," "including," "has," "have," and "having," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. For example, the expression "A and/or B" denotes A, B, or A and B. Expressions such as "at least one of," when preceding a list of elements, modify the entire list of elements and do not modify the individual elements of the list. For example, the expression "at least one of a, b, or c," "at least one of a, b, and c," and "at least one selected from the group consisting of a, b, and c" indicates only a, only b, only c, both a and b, both a and c, both b and c, all of a, b, and c, or variations thereof.

As used herein, the term "substantially," "about," and similar terms are used as terms of approximation and not as terms of degree, and are intended to account for the inherent variations in measured or calculated values that would be recognized by those of ordinary skill in the art. Further, the use of "may" when describing embodiments of the present disclosure refers to "one or more embodiments of the present disclosure." As used herein, the terms "use," "using," and "used" may be considered synonymous with the terms "utilize," "utilizing," and "utilized," respectively.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

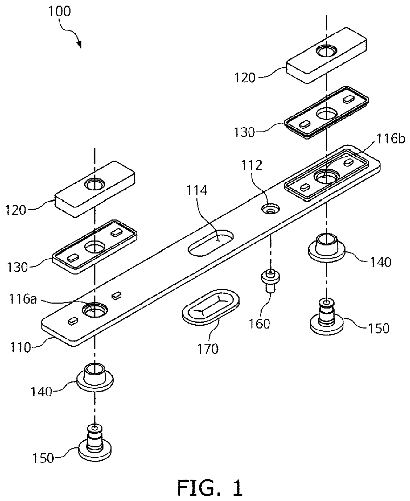

FIG. 1 illustrates an exploded perspective view of a battery cap assembly 100 according to an embodiment of the present disclosure.

The battery cap assembly 100 may be included in a battery cell. The battery cap assembly 100 may be connected to (e.g., coupled to or attached to) an upper portion of a case in which an electrode assembly is accommodated. The electrode assembly may be formed by winding or stacking a stacked body of a first electrode plate, a separator, and a second electrode plate formed in a thin plate or film shape. The first electrode plate of the electrode assembly may serve as a cathode, and the second electrode plate may serve as an anode. In some embodiments, the first electrode plate and the second electrode plate may also perform opposite functions as each other. The case may have an opening formed in an upper portion of the case, and may have an accommodation space to accommodate the electrode assembly inside the case through the opening. A cap plate 110 may be connected to (e.g., coupled to or attached to) the opening of the case to seal the case.

The battery cap assembly 100 may include the cap plate 110, terminal plates 120, upper insulating members 130, gaskets 140, and rivet terminals 150.

The cap plate 110 may include an electrolyte inlet 112, a vent hole 114, and terminal holes 116a and 116b. The electrolyte inlet 112 is a through-hole formed in the cap plate 110, and may allow the electrolyte to be injected into the case after being connected to (e.g., coupled to or attached to) the opening of the case and sealed. The electrolyte inlet 112 may be sealed with a sealing member 160 after the electrolyte is injected into the electrolyte inlet 112.

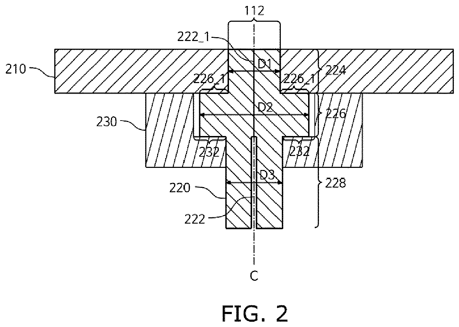

According to an embodiment, the sealing member 160 may include an electrolyte inflow passage that is formed of an elastic material, and penetrates the sealing member 160 in a longitudinal direction to enable the electrolyte to be reinjected into the electrolyte inflow passage for a second-use of the battery. This will be described in more detail below with reference to FIGS. 2 through 10.

The vent hole 114 is formed in the cap plate 110 to discharge an internal pressure of the battery cell, and may be sealed with a vent plate 170. In response to gas that may be generated due to an abnormal reaction inside the battery cell and pressure inside the case exceeding a critical range, the gas is discharged through the vent hole 114 opened by the vent plate 170 being separated to the outside, and thereby, the internal pressure of the battery cell may be reduced.

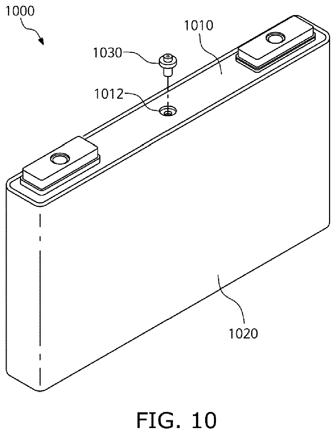

According to an embodiment, the vent hole 114 formed in the cap plate 110 may be omitted as needed or desired. In some embodiments, the electrolyte inlet 112 and the sealing member 160 may perform functions of the vent hole 114 and the vent plate 170, respectively. Accordingly, in response to the internal pressure of the battery cell being increased, the sealing member 160 inserted into the electrolyte inlet 112 may be separated from the electrolyte inlet 112, such that the gas is discharged. This will be described in more detail below with reference to FIG. 10.

The terminal holes 116a and 116b may include a first terminal hole 116a and a second terminal hole 116b. A negative terminal (or a positive terminal) may be installed in the first terminal hole 116a, and may be electrically connected to a negative electrode (or a positive electrode) of the electrode assembly in the case. A positive terminal (or a negative terminal) may be installed in the second terminal hole 116b, and may be electrically connected to a positive electrode (or a negative electrode) of the electrode assembly in the case.

The terminal plates 120 may be positioned on upper portions of the terminal holes 116a and 116b, respectively. The upper insulating members 130 may be positioned between the terminal plates 120 and the terminal holes 116a and 116b to electrically insulate the terminal plates 120 from the cap plate 110.

The rivet terminals 150 may be positioned in lower portions of the terminal holes 116a and 116b, respectively. The rivet terminals 150 may be electrically connected to the electrode assembly. The gaskets 140 may be positioned between the rivet terminals 150 and the cap plate 110 to electrically insulate the rivet terminals 150 from the cap plate 110.

Hereinafter, various embodiments of the sealing member 160, in which an electrolyte inflow passage is formed to enable the electrolyte to be reinjected for a second-use of the battery, will be described in more detail with reference to some other drawings.

FIG. 2 illustrates a cross-sectional view showing a state where a sealing member 220 is assembled to an electrolyte inlet according to an embodiment of the present disclosure.

A cap plate 210 and the sealing member 220 illustrated in FIG. 2 may correspond to the cap plate 110 and the sealing member 160, respectively, as illustrated in FIG. 1.

According to an embodiment, at least a part of the sealing member 220 may be fitted into an electrolyte inlet (e.g., 112 of FIG. 1) formed in the cap plate 210. In some embodiments, the sealing member 220 may be connected to (e.g., coupled to or attached to) the electrolyte inlet from a lower side of the cap plate 210 before the cap plate 210 is connected to (e.g., coupled to or attached to) a case.

According to an embodiment, the sealing member 220 may include a head portion 224, a fixing portion 226, and a tail portion 228. The sealing member 220 may be a cylindrical member. In some embodiments, a diameter of at least one of the head portion 224, the fixing portion 226, and/or the tail portion 228 of the sealing member 220 may be different from the diameters of the others. For example, a diameter D1 of the head portion 224 and a diameter D3 of the tail portion 228 may be equal to or substantially equal to each other, and a diameter D2 of the fixing portion 226 may be greater than the diameter D1 of the head portion 224 and the diameter D3 of the tail portion 228. In another example, the diameters of all of the head portion 224, the fixing portion 226, and the tail portion 228 may be different from each other. In some embodiments, the diameter D1 of the head portion 224 may be less than the diameter D2 of the fixing portion 226, and the diameter D3 of the tail portion 228 may also be less than the diameter D2 of the fixing portion 226.

The head portion 224 may be formed in one end of the sealing member 220, and may be inserted into an inner diameter of the electrolyte inlet to be in close contact with the inner diameter. For example, the head portion 224 may be fitted into the electrolyte inlet through a lower portion of the cap plate 210. The head portion 224 may have the diameter D1 greater than the inner diameter of the electrolyte inlet (e.g., 112) to be compressed and inserted into the inner diameter of the electrolyte inlet. Although FIG. 2 illustrates the diameter of the head portion 224 that is connected to (e.g., coupled to or attached to) the electrolyte inlet as D1, this is to represent the diameter of the head portion 224 before the sealing member 220 is assembled to the electrolyte inlet, and in a case where the head portion 224 is compressed and inserted into the electrolyte inlet, the diameter of the head portion 224 may be less than D1.

The fixing portion 226 may be positioned at (e.g., in or on) a lower end of the head portion 224, and may have a protrusion 226_1 for fixing the sealing member 220. In an embodiment, a lower portion of the cap plate 210 may further include a fixing member 230 having a recess portion 232 for accommodating the protrusion 226_1 of the fixing portion 226. In an embodiment, the fixing member 230 may include a space for accommodating the fixing portion 226 of the sealing member 220, and may have an opening formed to allow the tail portion 228 to pass therethrough. The fixing member 230 may be a cylindrical member, but the present disclosure is not limited thereto.

The tail portion 228 may extend from the lower end of the fixing portion 226, and may extend in a longitudinal direction of the sealing member 220.

According to an embodiment, the sealing member 220 may include an electrolyte inflow passage 222 that is formed of an elastic material, and penetrates the sealing member 220 in the longitudinal direction to enable the electrolyte to be injected into the electrolyte inflow passage 222. The electrolyte inflow passage 222 may be formed in the center C of the sealing member 220 in a cross-sectional view (e.g., in a cross-section of the sealing member 220). An electrolyte injector may be inserted into the electrolyte inflow passage 222, such that the electrolyte is injected into the case.

According to an embodiment, the electrolyte inflow passage 222 may include sections with different passage widths from each other. For example, at least one section 222_1 of the electrolyte inflow passage 222 may have inner surfaces that are in close contact with each other to prevent the electrolyte from leaking out. The inner surfaces of the passages that are in close contact with each other may be spaced (e.g., separated) from each other to be opened when (e.g., only when) the electrolyte injector is injected into the passage to reinject the electrolyte.

Accordingly, by reinjecting the electrolyte into the electrolyte inflow passage 222 that is made of an elastic material and formed in the sealing member 220, degradation factors due to a loss of the electrolyte may be reduced or removed, and the sealing performance of the sealing member that is made of the elastic material may be maintained or substantially maintained, and thus, the battery may be reused more efficiently.

The inner surfaces of other sections of the electrolyte inflow passage 222, except for the section 222_1 described above, may be spaced (e.g., separated) from each other without being in close contact with each other. Accordingly, reinjection of the electrolyte may be made easier, and the electrolyte may be prevented from being leaked out.

The structural difference for each section of the passage and the related effects may also be applied to other embodiments described in more detail hereinafter, and thus, redundant description may not be repeated.

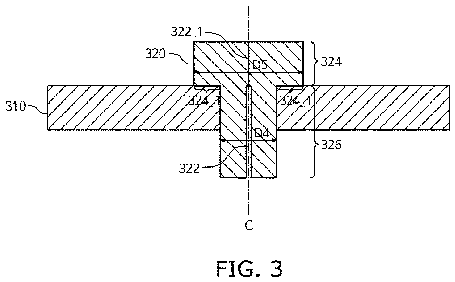

FIG. 3 illustrates a cross-sectional view showing a state where a sealing member 320 is assembled to an electrolyte inlet according to another embodiment of the present disclosure.

A cap plate 310 and the sealing member 320 illustrated in FIG. 3 may correspond to the cap plate 110 and the sealing member 160, respectively, as illustrated in FIG. 1.

According to an embodiment, at least a part of the sealing member 320 may be fitted into an electrolyte inlet (e.g., 112 of FIG. 1) formed in the cap plate 310. In some embodiments, the sealing member 320 may be connected to (e.g., coupled to or attached to) the electrolyte inlet through an upper portion of the cap plate 310, either before or after the cap plate 310 is connected to (e.g., coupled to or attached to) a case.

According to an embodiment, the sealing member 320 may include a body portion 326 and an upper fixing portion 324. The sealing member 320 may be a cylindrical member. In some embodiments, the body portion 326 and the upper fixing portion 324 of the sealing member 320 may have different diameters from each other. For example, a diameter D4 of the body portion 326 may be greater than an inner diameter of the electrolyte inlet, such that the body portion 326 is compressed and inserted into the inner diameter of the electrolyte inlet. A diameter D5 of the upper fixing portion 324 may be greater than the diameter D4 of the body portion 326, such that the upper fixing portion 324 may not pass through the electrolyte inlet. Although FIG. 3 illustrates that a length of the body portion 326 is longer than a thickness of the cap plate 310, the present disclosure is not limited thereto, and the length of the body portion 326 may correspond to (e.g., may be the same or substantially the same as) the thickness of the cap plate 310.

The upper fixing portion 324 may include a lower surface 324_1 that extends from an upper end of the body portion 326, and faces an upper surface of the cap plate 310 in a state where the body portion 326 is inserted into the electrolyte inlet to be in close contact with the electrolyte inlet. Accordingly, it may be possible to prevent the sealing member 320 from passing through and being introduced into the case.

According to an embodiment, the sealing member 320 may include an electrolyte inflow passage 322 that penetrates the sealing member 320 in a longitudinal direction, and is formed of an elastic material to enable the electrolyte to be injected into the electrolyte inflow passage 322. The electrolyte inflow passage 322 may be formed in the center C of a cross-section of the sealing member 320. An electrolyte injector may be inserted into the electrolyte inflow passage 322 to inject the electrolyte into the case.

According to an embodiment, the electrolyte inflow passage 322 may include sections having different passage widths from each other. For example, at least one section 322_1 of the electrolyte inflow passage 322 may have inner surfaces that are in close contact with each other to prevent the electrolyte from leaking out.

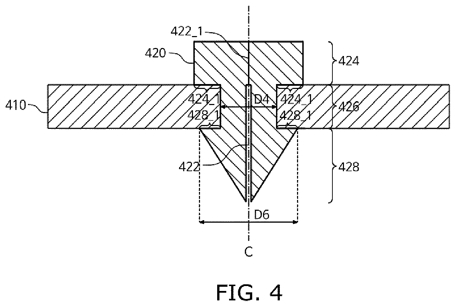

FIG. 4 illustrates a cross-sectional view showing a state where a sealing member 420 is assembled to an electrolyte inlet according to another embodiment of the present disclosure.

A cap plate 410 and the sealing member 420 illustrated in FIG. 4 may correspond to the cap plate 110 and the sealing member 160, respectively, as illustrated in FIG. 1. Furthermore, a body portion 426 and an upper fixing portion 424 of the sealing member 420 illustrated in FIG. 4 may correspond to the body portion 326 and the upper fixing portion 324, respectively, as illustrated in FIG. 3. For example, the upper fixing portion 424 may include a lower surface 424_1 formed to face an upper surface of the cap plate 410 in a state where the body portion 426 is inserted into an electrolyte inlet to be in close contact with the electrolyte inlet, and may prevent the sealing member 420 from passing through and being introduced into a case.

According to an embodiment, the sealing member 420 may further include a lower fixing portion 428. The lower fixing portion 428 may be compressed and passed through an inner diameter of the electrolyte inlet 112. Furthermore, the lower fixing portion 428 may be fixed to the cap plate 410 in a state where the sealing member 420 is assembled. As such, the lower fixing portion 428 may include an upper surface 428_1 formed to face a lower surface of the cap plate 410 in a state where the body portion 426 is inserted into the electrolyte inlet to be in close contact with the electrolyte inlet. In some embodiments, a maximum diameter D6 of the lower fixing portion 428 may be greater than the diameter D4 of the body portion 426.

According to an embodiment, the lower fixing portion 428 may be formed in various suitable shapes that may be passed through the electrolyte inlet. For example, the lower fixing portion 428 may be formed in a cone shape. In some embodiments, the lower fixing portion 428 may have a diameter that decreases toward a lower portion of the lower fixing portion 428. In another embodiment, the lower fixing portion 428 may be formed in a hemispherical shape. In an embodiment, a flat surface of the hemispherical shape may correspond to an upper surface 428_1 of the lower fixing portion 428.

According to an embodiment, the sealing member 420 may include an electrolyte inflow passage 422 that penetrates the sealing member 420 in a longitudinal direction, and is formed of an elastic material to enable the electrolyte to be injected into the electrolyte inflow passage 422. The electrolyte inflow passage 422 may be formed in the center C of a cross-section of the sealing member 420. An electrolyte injector may be inserted into the electrolyte inflow passage 422 to inject the electrolyte into a case.

According to an embodiment, the electrolyte inflow passage 422 may include sections with different passage widths from each other. For example, at least one section 422_1 of the electrolyte inflow passage 422 may have inner surfaces that are in close contact with each other to prevent the electrolyte from leaking out.

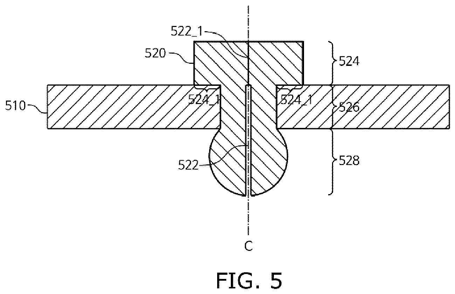

FIG. 5 illustrates a cross-sectional view showing a state where a sealing member 520 is assembled to an electrolyte inlet according to another embodiment of the present disclosure.

A cap plate 510 and the sealing member 520 illustrated in FIG. 5 may correspond to the cap plate 110 and the sealing member 160, respectively, as illustrated in FIG. 1. Furthermore, a body portion 526 and an upper fixing portion 524 of the sealing member 520 illustrated in FIG. 5 may correspond to the body portion 326 and the upper fixing portion 324, respectively, as illustrated in FIG. 3. For example, the upper fixing portion 524 may include a lower surface 524_1 formed to face an upper surface of the cap plate 510 in a state where the body portion 526 is inserted into an electrolyte inlet to be in close contact with the electrolyte inlet, and may prevent the sealing member 520 from passing through and being introduced into a case. In addition, electrolyte inflow passage 522 and one section 522_1 of the electrolyte inflow passage 522 may correspond to the electrolyte inflow passage 322 and 422 and one section 322_1 and 422_1 of the electrolyte inflow passage 322 and 422, respectively, as illustrated in FIGS. 3 and 4.

In an embodiment, the lower fixing portion 528 may be formed in a spherical shape. In some embodiments, a maximum diameter of the lower fixing portion 528 may be greater than a diameter of the body portion 526. Accordingly, the lower fixing portion 528 may be compressed by a pressurizing force and passed through the electrolyte inlet, and the maximum diameter of the lower fixing portion 528 may be greater than that of the electrolyte inlet, such that the lower fixing portion 528 may be fixed without being separated from the electrolyte inlet.

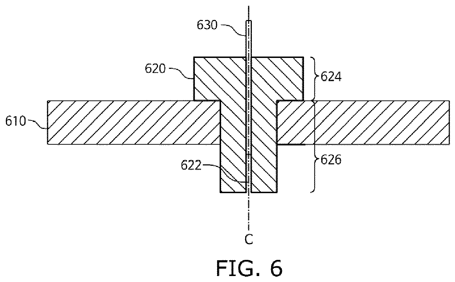

FIG. 6 illustrates a state where an electrolyte injector is inserted through an electrolyte inflow passage 622 of a sealing member 620 according to an embodiment of the present disclosure.

A cap plate 610 and the sealing member 620 illustrated in FIG. 6 may correspond to the cap plate 110 and the sealing member 160, respectively, as illustrated in FIG. 1. Furthermore, a body portion 626 and an upper fixing portion 624 of the sealing member 620 illustrated in FIG. 6 may correspond to the body portion 326 and the upper fixing portion 324, respectively, as illustrated in FIG. 3.

According to an embodiment, the sealing member 620 may include an electrolyte inflow passage 622 that penetrates the sealing member 620 in a longitudinal direction, and is formed of an elastic material to enable the electrolyte to be injected into the electrolyte inflow passage 622 by an electrolyte injector 630. The electrolyte inflow passage 622 may be formed in the center C of the sealing member 620.

The electrolyte injector 630 may be inserted into the electrolyte inflow passage 622 to inject and/or reinject the electrolyte into the case. In some embodiments, inner surfaces of at least some sections of the electrolyte inflow passage 622 of the sealing member 620 inserted into the electrolyte inlet may be spaced (e.g., may be separated) from each other, such that the electrolyte injector 630 may be reinserted into the electrolyte inlet passage 622. For example, in a case where the electrolyte injector 630 having an inner diameter greater than an inner diameter of the electrolyte inflow passage 622 is inserted into the electrolyte inflow passage 622, the electrolyte inflow passage 622 may be expanded to match an outer diameter of the electrolyte inlet.

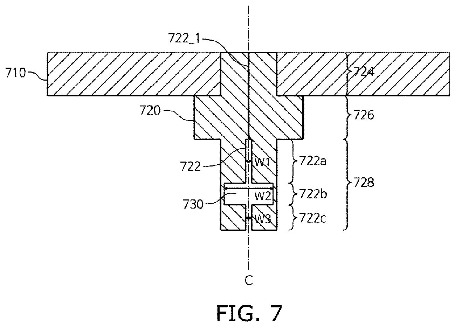

FIG. 7 illustrates an example of a sealing member 720 including a cavity 730 that prevents a backflow of an electrolyte, according to an embodiment of the present disclosure.

A cap plate 710 and the sealing member 720 illustrated in FIG. 7 may correspond to the cap plate 110 and the sealing member 160, respectively, as illustrated in FIG. 1. Furthermore, a head portion 724, a fixing portion 726, and a tail portion 728 of the sealing member 720 illustrated in FIG. 7 may correspond to the head portion 224, the fixing portion 226, and the tail portion 228, respectively, as illustrated in FIG. 2.

According to an embodiment, the sealing member 720 may include an electrolyte inflow passage 722 that is formed of an elastic material, and penetrates the sealing member 720 in a longitudinal direction to enable the electrolyte to be injected and/or reinjected into the electrolyte inflow passage 722. The electrolyte inflow passage 722 may be formed in the center C of a cross-section of the sealing member 720. The electrolyte inflow passage 722 may include sections with different widths from each other. For example, at least one section 722_1 of the electrolyte inflow passage 722 may have inner surfaces that are in close contact with each other to prevent the electrolyte from leaking out.

According to an embodiment, the cavity 730 for preventing the backflow of the electrolyte may be formed in at least some sections of the electrolyte inflow passage 722 of the sealing member 720. For example, as illustrated in FIG. 7, the cavity 730 may be formed inside the tail portion 728 of the sealing member 720, but the present disclosure is not limited thereto.

The cavity 730 may be formed by forming a width of at least one section of the electrolyte inflow passage 722 to be different from widths of the other sections. For example, in the electrolyte inflow passage 722, some sections may include a first section 722a having a first width W1, a second section 722b connected to a lower portion of the first section 722a and having a second width W2 greater than the first width W1, and a third section 722c connected to a lower portion of the second section 722b and having a third width W3 less than the second width W2.

According to an embodiment, the electrolyte inflow passage 722 of the sealing member 720 may include the first section 722a having the first width W1, and the second section 722b connected to the lower portion of the first section 722a and having the second width W2 greater than the first width W1. In some embodiments, the cavity 730 may be formed to prevent the backflow of the electrolyte by inserting a cavity forming member including a passage of the third section 722c having the third width W3 less than the width W2 into the integrated sealing member 720, and fixing the cavity forming member to the integrated sealing member 720.

Accordingly, the electrolyte may be prevented from flowing back through the electrolyte inflow passage 722 due to a capillary action, and thus, the sealing performance of battery cells may be increased.

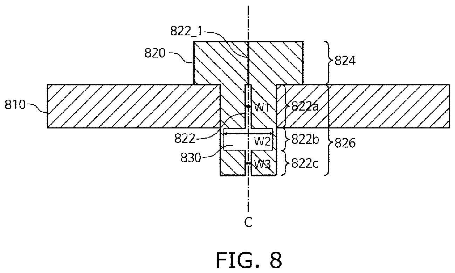

FIG. 8 illustrates an example of a sealing member 820 including a cavity 830 that prevents a backflow of an electrolyte, according to another embodiment of the present disclosure.

A cap plate 810 and the sealing member 820 illustrated in FIG. 8 may correspond to the cap plate 110 and the sealing member 160, respectively, as illustrated in FIG. 1. Furthermore, a body portion 826 and an upper fixing portion 824 of the sealing member 820 illustrated in FIG. 8 may correspond to the body portion 326 and the upper fixing portion 324, respectively, as illustrated in FIG. 3. In an embodiment, the sealing member 820 may further include lower fixing portions 428 and 528 as illustrated in FIGS. 4 and 5.

According to an embodiment, the sealing member 820 may include an electrolyte inflow passage 822 that is formed of an elastic material, and penetrates the sealing member 820 in a longitudinal direction to enable the electrolyte to be injected and/or reinjected into the electrolyte inflow passage 822. The electrolyte inflow passage 822 may be formed in the center C of the sealing member 820. The electrolyte inflow passage 822 may include sections having different widths from each other. For example, at least one section 822_1 of the electrolyte inflow passage 822 may have inner surfaces that are in close contact with each other to prevent the electrolyte from leaking out.

According to an embodiment, the cavity 830 for preventing the backflow of the electrolyte may be formed in at least a part of the electrolyte inflow passage 822 of the sealing member 820. For example, as illustrated in FIG. 8, the cavity 830 may be formed inside the body portion 826 of the sealing member 820, but the present disclosure is not limited thereto.

The cavity 830 may be formed by forming a width of at least one section of the electrolyte inflow passage 822 to be different from widths of the other sections. For example, in the electrolyte inflow passage 822, some sections may include a first section 822a having a first width W1, a second section 822b connected to a lower portion of the first section 822a and having a second width W2 greater than the first width W1, and a third section 822c connected to a lower portion of the second section 822b and having a third width W3 less than the second width W2.

According to an embodiment, the electrolyte inflow passage 822 of the sealing member 820 may include the first section 822a having the first width W1, and the second section 822b connected to the lower portion of the first section 822a and having the second width W2 greater than the first width W1. In some embodiments, the cavity 830 may be formed to prevent the backflow of the electrolyte by inserting a cavity forming member including a passage of the third section 822c having the third width W3 less than the second width W2 into the integrated sealing member 820, and fixing the cavity forming member to the integrated sealing member 820.

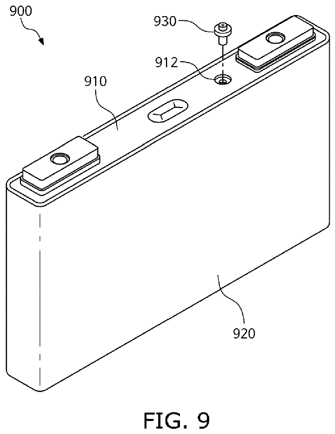

FIG. 9 illustrates an example of a battery cell 900 including a sealing member 930 according to an embodiment of the present disclosure.

A battery cap assembly 910 illustrated in FIG. 9 may correspond to the battery cap assembly 100 illustrated in FIG. 1. Furthermore, the sealing member 930 illustrated in FIG. 9 may correspond to any one of the sealing members illustrated in FIGS. 2 through 8.

According to an embodiment, the battery cell 900 may include an electrode assembly, the battery cap assembly 910, and a case 920 in which the electrode assembly is accommodated. The electrode assembly may be formed by winding or stacking a stacked body of a first electrode plate, a separator, and a second electrode plate formed in a thin plate or film shape. The case 920 may have an opening formed in an upper portion of the case 920, and may have an accommodation space so that the electrode assembly is accommodated inside the case 920 through the opening. A cap plate of the battery cap assembly 910 may be connected to (e.g., coupled to or attached to) the opening of the case to seal the case.

An electrolyte inlet 912 for electrolyte injection may be formed in the cap plate of the battery cap assembly 910. The electrolyte inlet 912 may be sealed with the sealing member 930 after the electrolyte is injected into the electrolyte inlet 912.

Accordingly, by sealing the electrolyte inlet 912 by using the sealing member 930 including an electrolyte inflow passage made of an elastic material so that electrolyte may be reinjected, degradation factors due to a loss of the electrolyte may be reduced or removed, and the battery cell 900 that may maintain the sealing performance of the sealing member made of the elastic material may be provided.

While FIG. 9 illustrates an example in which the battery cell is a prismatic battery, the shape of a battery is not limited thereto, and the case of the battery cell may have various suitable shapes, such as a circular shape or a pouch shape.

FIG. 10 illustrates an example of a battery cell 1000 including a sealing member 1030 according to another embodiment of the present disclosure.

The battery cell 1000 illustrated in FIG. 10 may correspond to the battery cell 900 illustrated in FIG. 9. Furthermore, the sealing member 1030 illustrated in FIG. 10 may correspond to any one of the sealing members illustrated in FIGS. 2 to 8.

According to an embodiment, the vent hole formed in the cap plate of the battery cap assembly 1010 may be omitted. In some embodiments, as an internal pressure of the battery cell is increased, the internal gas may be discharged through an electrolyte inlet 1012. For example, in response to a case where the pressure in a critical range is applied to the sealing member 1030 inserted into the electrolyte inlet 1012 from a lower direction of the cap plate of the battery cap assembly 1010 (e.g., in response to a case where the pressure in the case increases due to an increase in the internal gas), the sealing member 1030 may be discharged from the electrolyte inlet 1012 in an outward direction (e.g., an upward direction in FIG. 10). In some embodiments, the pressure in the critical range may be 1.5 MPa to 2 MPa. In another example, the sealing member 1030 may be deformed in shape at a temperature in a critical range, such that the electrolyte inlet 1012 is opened. In some embodiments, the temperature in the critical range may be 200°C to 250°C.

Accordingly, by omitting the vent hole and the vent plate for discharging the internal pressure in the cap plate of the battery cap assembly 1010, battery cell production costs may be reduced.

FIG. 10 illustrates an example in which the battery cell is a prismatic battery, but the shape of the battery is not limited thereto, and the case of the battery cell may have various suitable shapes, such as a circular shape or a pouch shape.

The foregoing is illustrative of some embodiments of the present disclosure, and is not to be construed as limiting thereof. Although some embodiments have been described, those skilled in the art will readily appreciate that various modifications are possible in the embodiments without departing from the scope of the present disclosure. It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. Therefore, it is to be understood that the foregoing is illustrative of various example embodiments and is not to be construed as limited to the specific embodiments disclosed herein, and that various modifications to the disclosed embodiments, as well as other example embodiments, are intended to be included within the spirit and scope of the present disclosure as defined in the appended claims, and their equivalents.

### DESCRIPTION OF SOME REFERENCE SYMBOLS

100: battery cell assembly
110: cap plate
112: electrolyte inlet
114: vent hole
120: terminal plate
130: upper insulating member
140: gasket
150: rivet terminal
160: sealing member
170: bent plate

## Claims

1. A battery cap assembly (100) comprising:
a cap plate (110, 210, 310, 410, 510, 610, 710, 810, 910, 1010) having an electrolyte inlet (112, 912, 1012); and
a sealing member (160, 220, 320, 420, 520, 620, 720, 820, 930, 1030) configured to be inserted into the electrolyte inlet (112, 912, 1012),
wherein the sealing member (160, 220, 320, 420, 520, 620, 720, 820, 930, 1030) has an electrolyte inflow passage (222, 322, 422, 522, 622, 722, 822) penetrating an elastic material in a longitudinal direction of the sealing member (160, 220, 320, 420, 520, 620, 720, 820, 930, 1030).

2. The battery cap assembly (100) as claimed in claim 1, wherein the sealing member (220) comprises:
a head portion (224) at one end of the sealing member (220), and configured to be inserted into an inner diameter of the electrolyte inlet (112) to be in contact with the inner diameter;
a fixing portion (226) at a lower end of the head portion (224), and having a protrusion (226_1) configured to fix the sealing member (220); and
a tail portion (228) at a lower end of the fixing portion (226), and extending in the longitudinal direction.

3. The battery cap assembly (100) as claimed in claim 2, wherein:
the head portion (224) has a first diameter (D1) greater than the inner diameter of the electrolyte inlet (112), and is configured to be compressed and inserted into the inner diameter of the electrolyte inlet (112);
the fixing portion (226) has a second diameter (D2) greater than the first diameter (D1); and
the tail portion (228) has a third diameter (D3) less than the second diameter (D2).

4. The battery cap assembly (100) as claimed in claim 2 or 3, further comprising a fixing member (230) below the cap plate (210), and having a recess portion (232) to accommodate the protrusion (226_1) of the fixing portion (226).

5. The battery cap assembly (100) as claimed in claim 1, wherein the sealing member (320, 420, 520, 620, 820) comprises:
a body portion (326, 426, 526, 626, 826) configured to be inserted into an inner diameter of the electrolyte inlet to be in contact with the inner diameter; and
an upper fixing portion (324, 424, 524, 624, 824) comprising a lower surface facing an upper surface of the cap plate (310, 410, 510, 610, 810) in a state in which the body portion (326, 426, 526, 626, 826) is inserted into the electrolyte inlet to be in contact with the electrolyte inlet.

6. The battery cap assembly (100) as claimed in claim 5, wherein the sealing member (420, 520) further comprises a lower fixing portion (428, 528) configured to be compressed and passed through the inner diameter of the electrolyte inlet to fix the sealing member (420, 520) to the cap plate (410, 510).

7. The battery cap assembly (100) as claimed in claim 6, wherein the lower fixing portion (428) comprises an upper surface (428_1) facing a lower surface of the cap plate (410) in a state in which the body portion (426) is inserted into the electrolyte inlet to be in contact with the electrolyte inlet.

8. The battery cap assembly (100) as claimed in any one of claims 5 to 7, wherein:
the body portion (326) has a fourth diameter (D4) greater than the inner diameter of the electrolyte inlet, and is configured to be compressed and inserted into the inner diameter of the electrolyte inlet; and
the upper fixing portion (324) has a fifth diameter (D5) greater than the fourth diameter (D4).

9. The battery cap assembly (100) as claimed in claim 6 or any claim dependent on claim 6, wherein a maximum diameter of the lower fixing portion (428) has a sixth diameter (D6) greater than a fourth diameter (D4) of the body portion (426).

10. The battery cap assembly (100) as claimed in any preceding claim, wherein the electrolyte inlet (1012) corresponds to a vent hole, and
wherein:
the sealing member (1030) is configured to be moved in an outward direction in a state in which pressure in a critical pressure range is applied from a lower direction of the cap plate (1010); or
the sealing member (1030) is configured to be deformed in shape to open the electrolyte inlet (1012) in a state in which a temperature is in a critical temperature range.

11. The battery cap assembly (100) as claimed in any preceding claim, wherein inner surfaces of at least one section (222_1, 322_1, 422_1, 522_1, 722_1, 822_1) of the electrolyte inflow passage (222, 322, 422, 522, 622, 722, 822) of the sealing member (160, 220, 320, 420, 520, 620, 720, 820, 930, 1030) inserted into the electrolyte inlet (112) are in contact with each other to prevent an electrolyte from leaking out.

12. The battery cap assembly (100) as claimed in claim 11, wherein the inner surfaces of the at least one section (222_1, 322_1, 422_1, 522_1, 722_1, 822_1) of the electrolyte inflow passage (222, 322, 422, 522, 622, 722, 822) of the sealing member (160, 220, 320, 420, 520, 620, 720, 820, 930, 1030) inserted into the electrolyte inlet (112) are configured to be separated from each other to allow an electrolyte injector (630) to be injected into the electrolyte inflow passage (222, 322, 422, 522, 622, 722, 822).

13. The battery cap assembly (100) as claimed in any preceding claim, wherein a cavity (730, 830) is located in a section of the electrolyte inflow passage (722, 822) to prevent a backflow of the electrolyte.

14. The battery cap assembly (100) as claimed in any preceding claim, wherein the electrolyte inflow passage (722, 822) comprises:
a first section (722a, 822a) having a first width (W1);
a second section (722b, 822b) connected to a lower portion of the first section (722a, 822a), and having a second width (W2) greater than the first width (W1); and
a third section (722c, 822c) connected to a lower portion of the second section (722b, 822b), and having a third width (W3) less than the second width (W2).

15. A battery cell (900, 1000) comprising:
an electrode assembly;
a case (920, 1020) configured to accommodate the electrode assembly, and having an open upper portion; and
a battery cap assembly (100) coupled to the upper portion of the case (920, 1020),
wherein the battery cap assembly (100) is as claimed in any preceding claim.
